# EUROPÄISCHE PATENTSCHRIFT

(11) **EP 3 450 327 B1**
(45) Veröffentlichungstag und Bekanntmachung des Hinweises auf die Patenterteilung: **29.07.2020**
(21) Anmeldenummer: 17188571.8
(22) Anmeldetag: 30.08.2017
(51) Int. Cl.: B65B 7/16, B65B 61/06, B65B 61/18, B26D 7/26, B29C 65/02, B29C 65/18, B29C 65/74, B29C 65/00, B29L 31/00

(54) **SIEGELSTATION SOWIE VERFAHREN ZUM HERSTELLEN VON SKINVERPACKUNGEN MIT AUFREISSECKE**
SEALING STATION AND METHOD FOR THE PRODUCTION OF SKIN PACKAGES WITH TEAR-OPEN CORNER
STATION DE SOUDAGE AINSI QUE PROCÉDÉ DE FABRICATION D'EMBALLAGE BLISTER POURVU D'UN ANGLE D'ARRACHAGE

(43) Veröffentlichungstag der Anmeldung: 06.03.2019
(73) Patentinhaber: MULTIVAC Sepp Haggenmüller SE & Co. KG, 87787 Wolfertschwenden (DE)
(72) Erfinder: MADER, Andreas, 87463 Dietmannsried (DE); ZEDELMAIER, Thomas, 87736 Böhen (DE); FISCHER, Klaus, 87746 Erkheim (DE); CAPRIOTTI, Luciano, 87730 Bad Grönenbach (DE); DÜRMEIER, Stefan, 89294 Oberroth (DE)
(74) Vertreter: Grünecker Patent- und Rechtsanwälte PartG mbB

(56) Entgegenhaltungen:
- WO-A1-2015/121270
- WO-A1-2016/193006
- US-A1- 2004 206 048
- US-A1- 2011 072 764

## Beschreibung

Die Erfindung bezieht sich auf eine Siegelstation für eine Verpackungsmaschine gemäß dem Anspruch 1, die insbesondere in Form eines Traysealers vorliegt, um Vakuumskinpackungen herzustellen. Ferner bezieht sich die Erfindung auf ein Verfahren zum Herstellen von Skinverpackungen gemäß dem unabhängigen Verfahrensanspruch 11.

Vakuumskinpackungen werden in der Praxis vor allem zur Verlängerung der Haltbarkeit darin eingeschlossener Produkte verwendet. Dabei werden Skinfolien als Oberfolienmaterial eingesetzt, die eng anliegend, insbesondere spannungsfrei, wie eine "zweite Haut" um das in einer Verpackungsschale aufgenommene Produkt tiefgezogen werden. Dadurch lässt sich auch das eingeschlossene Produkt stabil auf der Verpackungsschale in Position halten, was weitere Vorteile bei der Präsentation der Produkte mit sich bringt. Bei Fleischwaren werden Vakuumskinpackungen insbesondere auch dafür verwendet, um zu verhindern, dass sich daraus Fleischsaft absetzt und in der Verpackungsschale ansammelt.

Die EP 1 747 995 A1 offenbart eine Siegelvorrichtung, die dazu ausgebildet ist, Schalen mit Folien zu verschließen, die mittels eines Vakuumskinverfahrens tiefgezogen werden, um Vakuumskinpackungen herzustellen. Die Skinfolie wird dabei in Draufsicht betrachtet entlang eines umlaufenden Rands der Verpackungsschale ausgeschnitten und mit diesem versiegelt.

Die EP 2 441 683 B1 offenbart ein Verfahren zum Schneiden einer Deckelfolie in einer Schalenverschließstation einer Verpackungsmaschine. Die Deckelfolie kann als Skinfolie zur Herstellung von Vakuumskinpackungen vorliegen.

Bei bekannten Vakuumskinpackungen oben beschriebener Art werden die Produkte von der Skinfolie eng umschlossen unter Vakuumverschluss im Tray niedergehalten. Dies kann das Öffnen der Vakuumskinpackung, zumindest mittels Zweifingergriff, erschweren. Diese Problematik liegt ebenfalls bei anderen Verpackungstypen, d.h. Verpackungstypen ohne Skinfolie, vor.

WO 2016/193006 A1 offenbart eine Siegelstation mit einem innerhalb der Siegelstation positionierten Schneidmesser, anhand dessen ein Deckel zum Verschließen einer Verpackungsschale aus einer der Siegelstation zugeführten Oberfolie ausschneidbar ist.

WO 2015/121270 A1 offenbart eine Siegelstation, in welcher zum Versiegeln einer darin aufgenommenen Mulde ein bereits außerhalb der Siegelstation vorgeschnittener Deckel zugeführt wird.

US 2004/0206048 A1 sowie US 2011/0072764 A1 offenbaren ein Siegelwerkzeugoberteil mit einem daran gelagerten Schneidmesser zum Ausschneiden eines Deckels aus einer Oberfolie, der zum Versiegeln eines bereitgestellten Behälters eingesetzt wird.

Der Erfindung liegt die Aufgabe zugrunde, eine Vorrichtung zur verbesserten Herstellung von Verpackungen mit einer Aufreißecke, insbesondere von Vakuumskinpackungen mit einer Aufreißecke, zur Verfügung zu stellen, so dass die damit hergestellten Verpackungen einfach geöffnet werden können. Ferner ist es die Aufgabe der Erfindung, ein Verfahren zum verbesserten Herstellen von Vakuumskinpackungen zur Verfügung zu stellen.

Diese Aufgabe wird gelöst durch eine Siegelstation mit den Merkmalen des Anspruchs 1 sowie mittels eines Verfahrens gemäß dem unabhängigen Anspruch 11.

Die Erfindung betrifft eine Siegelstation für eine Verpackungsmaschine, die insbesondere in Form eines Traysealers vorliegt. Die Siegelstation umfasst ein Oberwerkzeug mit einer Siegelplatte sowie ein Unterwerkzeug mit einer Schalenaufnahme zur Aufnahme von mindestens einer zu verschließenden Verpackungsschale.

Innerhalb der Siegelstation ist ein Schneidmesser angeordnet, anhand dessen ein Deckel zum Verschließen der Verpackungsschale aus einer Oberfolie ausschneidbar ist, wobei das Schneidmesser zum Ausschneiden des Deckels entlang dessen Umrisses eine endlose Schneidkante aufweist, die einen ersten und einen zweiten Messerabschnitt ausbildet. Der erste Messerabschnitt ist zum Ausschneiden eines in Draufsicht auf einen Randbereich der Verpackungsschale verlaufenden ersten Abschnitts des Umrisses des Deckels ausgebildet. Der zweite Messerabschnitt ist zum Ausschneiden mindestens eines in Draufsicht außerhalb des Randbereichs der Verpackungsschale verlaufenden zweiten Abschnitts des Umrisses des Deckels ausgebildet, um eine über den Randbereich hinausragende Aufreißecke im Deckel herzustellen.

Erfindungsgemäß sind an der Siegelplatte außerhalb einer daran vorgesehenen Siegelfläche zum Herstellen einer Siegelnaht eine erste Klemmbacke und an der Schalenaufnahme eine zweite Klemmbacke vorgesehen, wobei die beiden Klemmbacken zum Ausschneiden der Aufreißecke aneinander drückbar sind, um die Oberfolie dazwischen einzuklemmen. Die beiden Klemmbacken wirken als Klemm-Einheit derart zusammen, dass das von ihnen dazwischen eingeklemmte Oberfolienmaterial zum Ausschneiden der Aufreißecke genau positioniert und für einen Schneidvorgang fixiert wird. Infolge der Verwendung der beiden Klemmbacken ergeben sich auch weitere verfahrenstechnische Vorteile für an den Schneidvorgang anschließende Verfahrensschritte, beispielsweise für das Versiegeln des Deckels und/oder für Verfahrensschritte zur Herstellung eines Skinfoliendeckels.

Vorzugsweise sind die erste und/oder zweite Klemmbacke zumindest teilweise aus einem Kunststoffmaterial, beispielsweise aus PE-Material (Polyethylen) und/oder aus PA-Material (Polyamid), bevorzugt aus PA6-Material (Polycaprolactam), hergestellt. PE-Material lässt sich hervorragend reinigen und beugt einem Ansiedeln von Bakterienkulturen vor, sodass es besonders gut in der Lebensmittelindustrie einsetzbar ist. PA-Material ist besonders verschleißfest. Grundsätzlich lässt sich das Oberfolienmaterial zwischen Kunststoffklemmbacken hervorragend fixieren. Außerdem ist eine Kunststoffklemmbacke als Gegenlager, sozusagen als Schneidunterlage, für einen schonenden Einsatz des Schneidmessers geeignet.

Vorteilhaft ist es auch, wenn die erste und/oder zweite Klemmbacke aus einem Material geringerer Wärmeleitfähigkeit als die Siegelplatte ausgebildet sind. Die Klemmbacken wirken damit relativ zur Siegelplatte als Wärmeisolatoren, um zweckgemäß zu verhindern, dass von der Siegelplatte, insbesondere von der daran ausgebildeten Siegelfläche, eine Wärmeleitung über die Klemmbacken auf die Aufreißecke entsteht. Dies vermindert eine Faltenbildung der Aufreißecke.

Eine Variante sieht vor, dass der zweite Messerabschnitt zumindest abschnittsweise an der ersten Klemmbacke anliegend geformt ist. Dies sorgt für eine stabile sowie eine kompakte Anordnung des zweiten Messerabschnitts an der Siegelplatte.

Besonders platzsparend lassen sich die beiden Klemmbacken dann innerhalb der Siegelstation, d.h. an der Siegelplatte und an der Schalenaufnahme, integrieren, wenn sie zumindest teilweise in Draufsicht betrachtet einen kleineren Radius aufweisen als ein zu ihnen hingerichteter (Eck-)Bereich der Siegelplatte oder der Schalenaufnahme.

Für einen verbesserten Betrieb der Siegelstation kann vorgesehen sein, dass die erste Klemmbacke lösbar an der Siegelplatte und/oder die zweite Klemmbacke lösbar an der Schalenaufnahme befestigt sind. Für Reinigungszwecke können die Klemmbacken somit leicht abmontiert werden. Außerdem können zur Herstellung unterschiedlich geformter Aufreißecken unterschiedlich ausgeprägte Klemmbacken zum Einsatz kommen.

Zweckmäßig ist es auch, wenn die erste Klemmbacke derart ausgebildet ist, dass sie beim Ausschneiden des Deckels in Draufsicht teilweise auf die Oberfolie über den Randbereich der Verpackungsschale drückbar ist. Dies sorgt für eine zusätzliche Fixierung der Oberfolie sowie der Schalenaufnahme, wobei sich insbesondere der Bereich der Aufreißecke relativ zur Schalenaufnahme besser fixieren lässt.

Eine bevorzugte Variante sieht vor, dass der zweite Messerabschnitt derart ausgebildet ist, dass er zumindest teilweise in die zweite Klemmbacke eintaucht, wenn die erste Klemmbacke gegen die zweite Klemmbacke gedrückt ist, um die Aufreißecke auszuschneiden. Ein Verrutschen des Folienmaterials ist dann insbesondere bei einem anschließenden hubgesteuerten Verfahrensschritt, beispielsweise einem Siegelvorgang, nicht möglich. Insbesondere kann der zweite Messerabschnitt derart ausgebildet sein, dass dessen Schnittkante hinsichtlich der ersten Klemmbacke leicht überstehend zur zweiten Klemmbacke hingewandt angeordnet ist. Dies sorgt für einen glatten Schnitt entlang der Kontur der Aufreißecke und gewährleistet weiterhin in der Übergangszone zwischen der Aufreißecke und dem Rest der Deckelfolie einen sauberen Schnitt.

Vorzugsweise verfügt die Siegelplatte über mehrere Belüftungsöffnungen zum Herstellen von Skinverpackungen. Über die Belüftungsöffnungen lässt sich in einer geschlossenen Siegelkammer der Siegelstation ein Vakuum erzeugen, um die Oberfolie zum Erwärmen zur Siegelplatte hin anzuheben. Die dadurch besser dehnbar gemachte Oberfolie lässt sich im Anschluss daran hervorragend zur Herstellung des Skins durch Aufheben des Vakuums oberhalb der Oberfolie, d.h. durch Belüften der Siegelkammer, als "zweite Haut", sprich eng anliegend, auf das in der Verpackungsschale positionierte (Lebensmittel-) Produkt niederziehen.

Eine Variante sieht vor, dass die Siegelplatte innerhalb der an ihr ausgebildeten Siegelfläche eine von der Schalenaufnahme weggerichtete Wölbung aufweist. Beim Vakuumskinprozess kann die Skinfolie in die Wölbung hineingezogen werden, um von der Siegelplatte effektiv auf eine Skintemperatur vorgewärmt zu werden.

Die Erfindung betrifft auch ein Verfahren zum Herstellen von Skinverpackungen (im Vorausgehenden sowie im Folgenden auch "Vakuumskinpackungen" genannt), wobei ein Deckel mit mindestens einer Aufreißecke aus einer als Skinfolie bereitgestellten Oberfolie mittels eines innerhalb einer Siegelstation einer Verpackungsmaschine angeordneten Schneidmessers ausgeschnitten wird, und wobei ringsum entlang eines Randbereichs einer innerhalb der Siegelstation bereitgestellten Verpackungsschale eine Siegelnaht hergestellt wird, wobei außerhalb der Siegelnaht in Draufsicht die Aufreißecke des aus der Skinfolie ausgeschnittenen Deckels über den Randbereich der Verpackungsschale hinausragt.

Mittels der Aufreißecke können vakuumskinverpackte Produkte besser geöffnet werden.

Eine erfindungsgemäße Fixierung der Skinfolie liegt dadurch vor, dass zum Ausschneiden des Deckels eine erste Klemmbacke, die an der Siegelplatte befestigt ist, die Skinfolie gegen eine zweite Klemmbacke drückt, die an der Schalenaufnahme befestigt ist, um die Aufreißecke des Deckels herzustellen. Anhand einer solchen Klemmfixierung lässt sich die Aufreißecke besonders prozesssicher herstellen. Qualitativ sowie ästhetisch ergeben sich hiermit zusätzliche Vorteile für die Aufreißecke.

Eine vorteilhafte Variante sieht vor, dass ein Messerabschnitt des Schneidmessers zumindest teilweise in die zweite Klemmbacke eintaucht, wenn die erste Klemmbacke gegen die zweite Klemmbacke gedrückt wird, um die Aufreißecke auszuschneiden. Dadurch lässt sich das Folienmaterial nicht nur kraft- sondern auch formschlüssig zwischen den Klemmbacken fixieren. Infolgedessen lassen sich auch an das Ausschneiden des Deckels innerhalb der Siegelstation nachgeschaltete Verfahrensschritte, beispielsweise ein, insbesondere hubgesteuerter, Siegelvorgang und/oder Verfahrensschritte zur Herstellung des Skins, besser durchführen.

Zum Ausschneiden der Aufreißecke ist es vorteilhaft, wenn in Draufsicht beim Ausschneiden des Deckels die erste Klemmbacke auf die Skinfolie über einem Teil des Randbereichs der Verpackungsschale drückt. Dies sorgt insbesondere für eine verbesserte Fixierung der Skinfolie im Bereich der Aufreißecke relativ zur Verpackungsschale.

Eine bevorzugte Variante sieht vor, dass die Siegelplatte die Skinfolie von oben druckbelüftet, sodass sie sich eng an ein in der Verpackungsschale befindliches Produkt anlegt. Vorzugsweise ist die Druckzufuhr produktbezogen anhand unterschiedlicher Druckkurven steuerbar.

Ausführungsbeispiele der Erfindung sind in den Zeichnungen dargestellt. Es zeigen:
- Figur 1: eine perspektivische Ansicht einer Verpackungsmaschine in Form eines Traysealers,
- Figur 2: eine erfindungsgemäß hergestellte Verpackung mit Aufreißecken bevorzugter Art,
- Figur 3: eine schematische Schnittdarstellung einer Vakuumskinpackung,
- Figur 4: einen konstruktiven Teilausschnitt einer erfindungsgemäßen Siegelstation,
- Figur 5: eine Draufsicht einer Schalenaufnahme einer erfindungsgemäßen Siegelstation,
- Figur 6: eine perspektivische Darstellung von unten einer Siegelplatte einer erfindungsgemäßen Siegelstation,
- Figur 7: eine vergrößerte schematische Darstellung einer erfindungsgemäßen Siegelstation im Bereich der Klemmbacken zum Herstellen der Aufreißecke,
- Figur 8: einen Ausschnitt einer erfindungsgemäßen Siegelstation im Bereich zur Herstellung der Aufreißecke mit eingetauchtem zweiten Messerabschnitt in einer Klemmbacke, und
- Figuren 9A bis 9F: Verfahrensschritte zum Herstellen von Skinverpackungen.

Gleiche Komponenten sind in den Figuren durchgängig mit gleichen Bezugszeichen versehen.

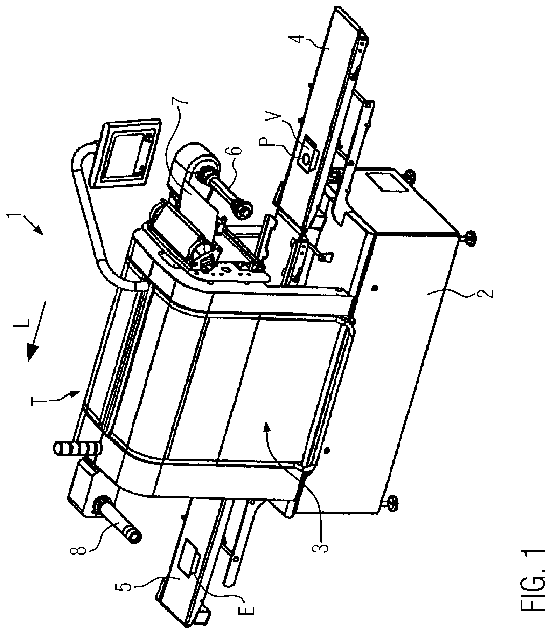

Figur 1 zeigt in perspektivischer Darstellung eine Verpackungsmaschine 1. Die Verpackungsmaschine 1 ist als Traysealer T ausgebildet. Der Traysealer T verfügt über ein Maschinengestell 2 sowie über eine daran montierte Siegelstation 3. Die Siegelstation 3 ist dazu konfiguriert, Verpackungen mit einer Aufreißecke herzustellen, insbesondere Vakuumskinpackungen mit einer Aufreißecke.

Gemäß Figur 1 umfasst der Traysealer T eine Zuführeinheit 4, auf welcher Verpackungsschalen V mit Produkten P der Siegelstation 3 zugeführt werden. Auf einer in Produktionsrichtung L weiter stromabwärts, hinter der Siegelstation 3 vorgesehenen Abführeinheit 5 werden fertig hergestellte Verpackungen E abgeführt. Ferner verfügt der Traysealer T über eine Abwickeleinheit 6 zum Abwickeln einer Oberfolie 7 sowie eine Aufwickeleinheit 8 zum Aufwickeln eines Folienrestmaterials.

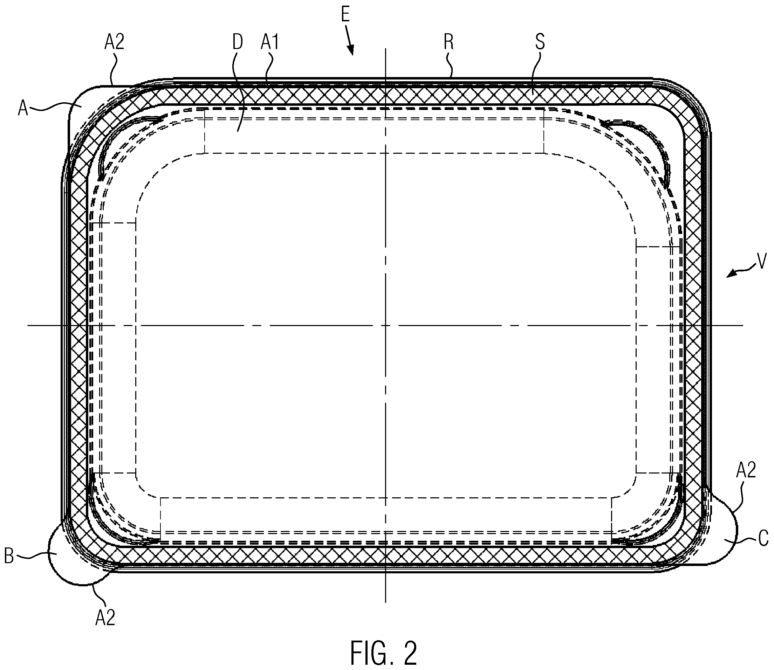

Figur 2 zeigt in Draufsicht eine Verpackung E mit daran unterschiedlich ausgebildeten Aufreißecken A, B, C. Die Verpackungsschale V der Verpackung E verfügt über einen Randbereich R, entlang welchem ein Deckel D mittels einer durch die Siegelstation 3 hergestellten Siegelnaht S versiegelt ist.

Gemäß Figur 2 ragen in Draufsicht die jeweiligen Aufreißecken A, B, C über den Randbereich R der Verpackungsschale V hinaus. Ein Umriss des Deckels D verfügt über einen in Draufsicht auf dem Randbereich R der Verpackungsschale V verlaufenden ersten Abschnitt A1 sowie über einen in Draufsicht außerhalb des Randbereichs R der Verpackungsschale V verlaufenden zweiten Abschnitt A2, der eine Kontur der jeweiligen Aufreißecke A, B, C definiert.

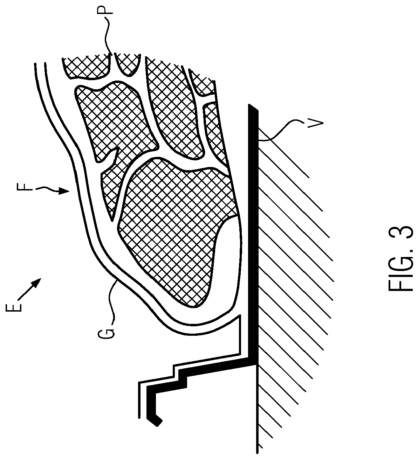

Figur 3 zeigt in schematischer Schnittdarstellung eine Verpackung E, die in Form einer Vakuumskinpackung F ausgebildet ist. Die Vakuumskinpackung F verfügt über eine Skinfolie G, die entlang einer Kontur des Produkts P eng anliegt. Das Produkt P ist unter Vakuum verpackt, wodurch sich seine Haltbarkeit verlängert, da durch den Entzug der Atmosphäre der biochemische Verfall des Produkts P verlangsamt wird.

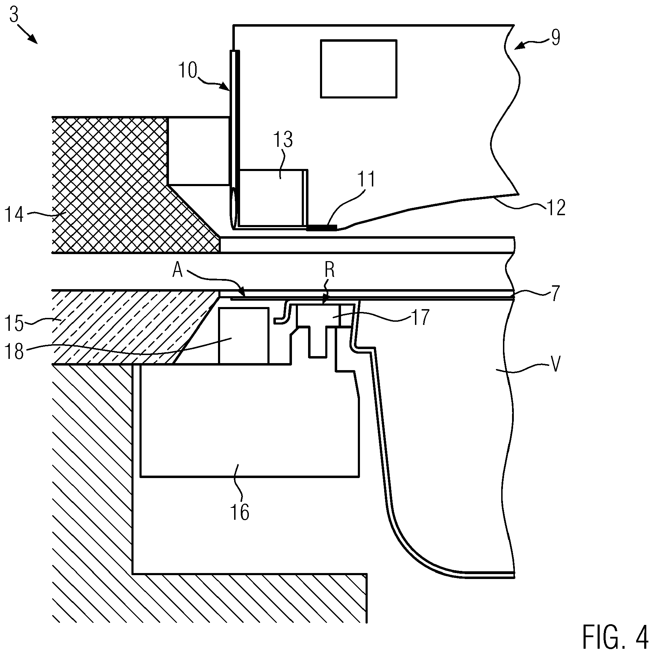

Figur 4 zeigt einen Ausschnitt der Siegelstation 3. Die Siegelstation 3 umfasst eine Siegelplatte 9 mit einem daran befestigten Schneidmesser 10. Außerdem bildet die Siegelplatte 9 eine Siegelfläche 11 aus, die zur Herstellung der in Figur 2 gezeigten Siegelnaht S konfiguriert ist. Ferner ist an der Siegelplatte 9 eine Wölbung 12 ausgebildet, in die sich mittels anliegenden Vakuums die Oberfolie 7 zum Vorwärmen hineinziehen lässt.

Ferner zeigt Figur 4, dass an der Siegelplatte 9 eine erste Klemmbacke 13 befestigt ist. Die erste Klemmbacke 13 ist vorzugsweise aus einem anderen Material hergestellt als die Siegelplatte 9, beispielsweise als Kunststoffformteil.

Ferner verfügt die Siegelstation 3 über einen Außenrahmen 14 sowie einen darunter angeordneten Klemmrahmen 15. Der Außenrahmen 14 sowie der Klemmrahmen 15 können derart zusammengeführt sein, dass sie für den Herstellungsprozess, insbesondere für das Ausschneiden des Deckels D und das Versiegeln desselben mit der Verpackungsschale V, die Oberfolie 7 einklemmen und bereithalten.

Weiter zeigt Figur 4 eine Schalenaufnahme 16, in welcher die Verpackungsschale V aufgenommen ist. Die Schalenaufnahme 16 verfügt über eine umlaufende Siegelleiste 17, auf der der Randbereich R der Verpackungsschale V aufliegt.

In Figur 4 ist auch zu sehen, dass an der Schalenaufnahme 16 eine zweite Klemmbacke 18 befestigt ist. Die erste und die zweite Klemmbacke 13, 18 sind zum Ausschneiden der Aufreißecke A, B, C aneinander gedrückt, um die Oberfolie 7 dazwischen einzuklemmen. Das in Figur 4 gezeigte Schneidmesser 10 schneidet dann die Aufreißecke A, B, C aus.

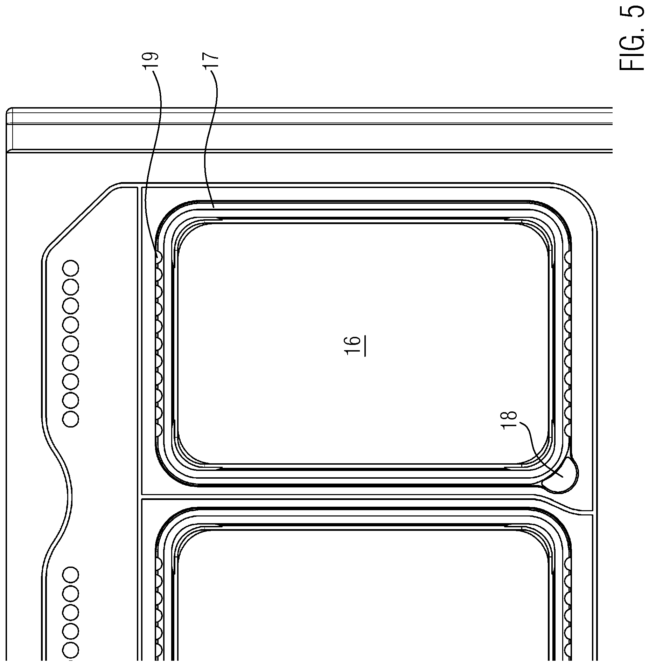

Figur 5 zeigt die Schalenaufnahme 16 in Draufsicht. Außerhalb der Siegelleiste 17 ist gemäß Figur 5 in Bildebene betrachtet unten links die zweite Klemmbacke 18 angeordnet. Ferner zeigt Figur 5, dass die Schalenaufnahme 16 Evakuierungs- bzw. Begasungsöffnungen 19 aufweist, die zum Schaffen einer vorbestimmten, gegebenenfalls temporären, Atmosphäre innerhalb der herzustellenden Verpackungen E einsetzbar sind.

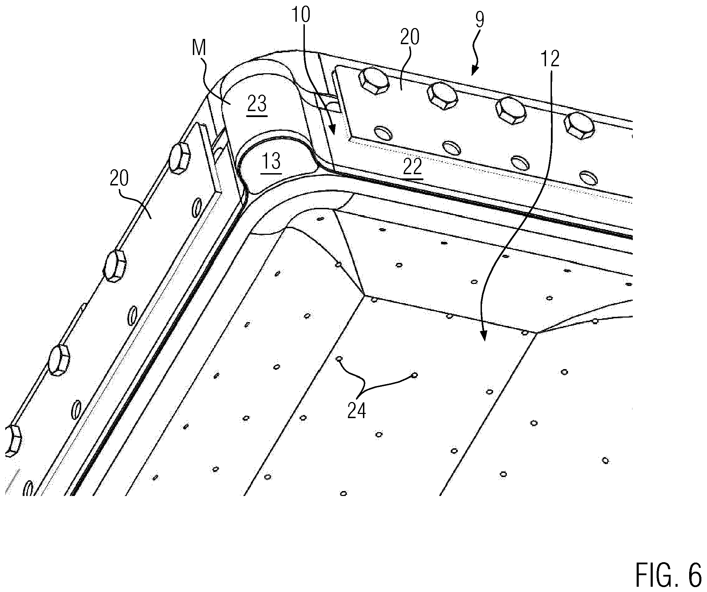

Figur 6 zeigt eine perspektivische Darstellung eines Ausschnitts der Siegelplatte 9. Das Schneidmesser 10 ist mittels Klemmleisten 20 außen an der Siegelplatte 9 lösbar festgeschraubt. Das Schneidmesser 10 ist als endloses Messerband M ausgebildet.

Ferner zeigt Figur 6, dass das Schneidmesser 10 zum Herstellen des in Figur 2 gezeigten ersten Abschnitts A1 des Deckels D einen ersten Messerabschnitt 22 sowie zum Herstellen des in Figur 2 gezeigten zweiten Abschnitts A2 des Deckels D einen zweiten Messerabschnitt 23 umfasst. Figur 6 zeigt auch, dass der zweite Messerabschnitt 23 entsprechend einer Form der herzustellenden Aufreißecke A, B, C an der ersten Klemmbacke 13 angrenzend angeordnet ist.

Weiter zeigt Figur 6, dass in der Wölbung 12 mehrere Evakuierungs- bzw. Belüftungsöffnungen 24 vorgesehen sind. Die Evakuierungs- bzw. Belüftungsöffnungen 24 werden zum Herstellen von Vakuumskinpackungen F verwendet. Dabei wird über die Evakuierungs- bzw. Belüftungsöffnungen 24 ein Vakuum innerhalb der Siegelstation 3 erzeugt, um zum Vorwärmen der Oberfolie 7 diese mittels des Vakuums in die Wölbung 12 hineinzuziehen. Beim anschließenden Auflösen des Vakuums erhöht sich schlagartig der Druck innerhalb der Siegelstation 3, wodurch sich die vorgewärmte Oberfolie 7 als Skin über das Produkt P niederlegt.

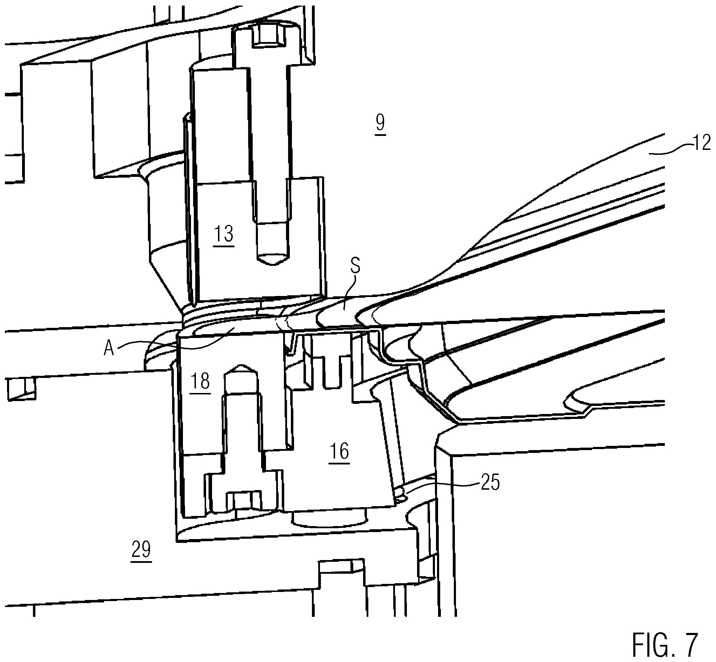

Figur 7 zeigt einen Ausschnitt der Siegelstation 3 in vergrößerter Darstellung. In Figur 7 ist zu sehen, dass die beiden Klemmbacken 13, 18 lösbar an der Siegelplatte 9 bzw. an der Schalenaufnahme 16 festgeschraubt sind. Außerdem zeigt Figur 7 ein Federpaket 25, das zwischen einem Lagerrahmen 29 und der Schalenaufnahme 16 vorgesehen ist. Anhand des Federpakets 25 ist die Schalenaufnahme 16 höhenverstellbar gelagert und kann insbesondere während eines Siegelvorgangs mittels der Siegelplatte 9 zum Lagerrahmen 29 hin gedrückt werden.

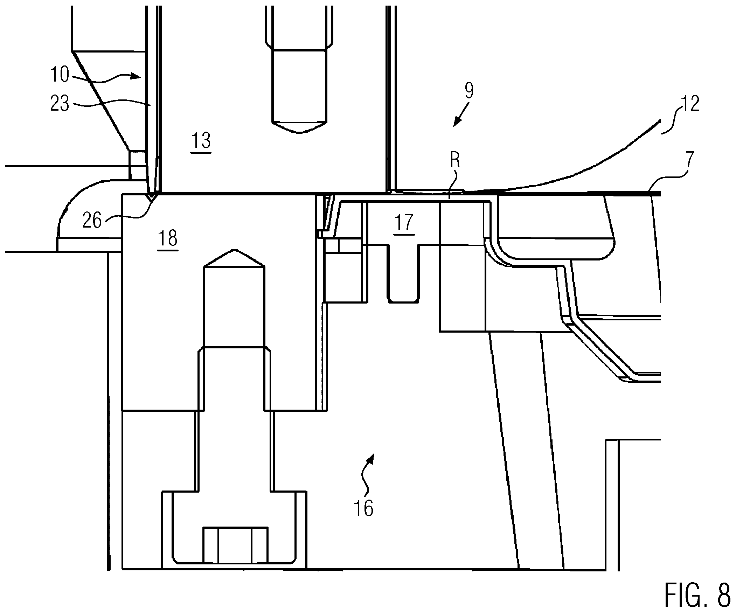

In Figur 8 sind die Siegelplatte 9 und die Schalenaufnahme 16 zusammengeführt dargestellt. Die beiden Klemmbacken 13, 18 sind dabei aneinandergedrückt. Dabei wird die Oberfolie 7 zwischen den beiden Klemmbacken 13, 18 eingeklemmt und die Aufreißecke A, B, C wird ausgeschnitten. Dafür taucht der zweite Messerabschnitt 23 des Schneidmessers 10 in eine an der zweiten Klemmbacke 18 ausgebildete Schneidkantenaufnahme 26 ein, um die Aufreißecke A, B, C auszuschneiden. Die Schneidkantenaufnahme 26 ist entsprechend einer Kontur einer Schneidkante des zweiten Messerabschnitts 23 geformt.

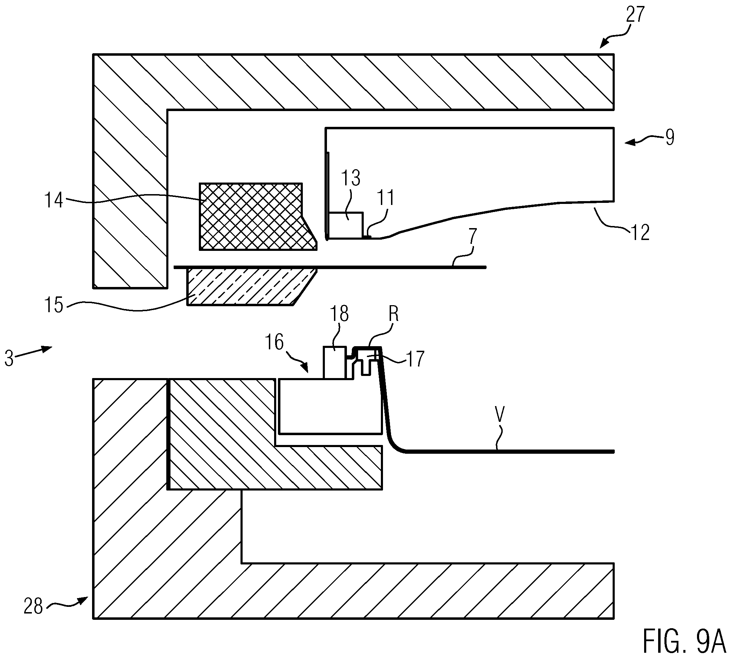

Anhand der folgenden Figuren 9A bis 9F wird ein erfindungsgemäßes Verfahren zum Herstellen von Skinverpackungen F beschrieben.

Figur 9A zeigt in schematischer Darstellung die Siegelstation 3. In der Figur 9A ist die Siegelstation 3 in einem geöffneten Zustand dargestellt. Die Siegelstation 3 verfügt über ein Oberwerkzeug 27 mit der Siegelplatte 9 sowie über ein Unterwerkzeug 28 mit der Schalenaufnahme 16.

In Figur 9A ist die Oberfolie 7 zwischen dem Außenrahmen 14 und dem Klemmrahmen 15 eingeführt, jedoch noch nicht dazwischen eingeklemmt. Die Verpackungsschale V liegt mit ihrem Randbereich R auf der Siegelleiste 17 der Schalenaufnahme 16 auf. Links neben der Siegelleiste 17 ist in Bildebene betrachtet die zweite Klemmbacke 18 auf der Schalenaufnahme 16 positioniert.

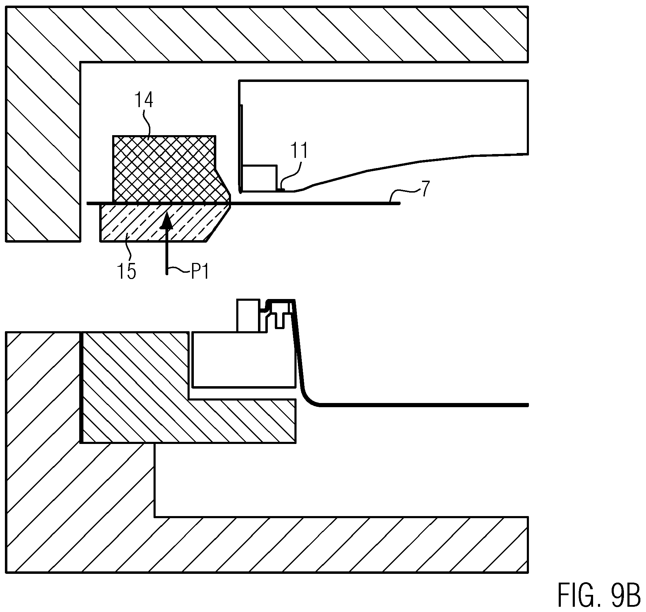

Aus der in Figur 9A dargestellten Anordnung wird nun gemäß Figur 9B in einem weiteren Verfahrensschritt die Oberfolie 7 zwischen dem Außenrahmen 14 und dem Klemmrahmen 15 eingeklemmt. Dafür wird der Klemmrahmen 15 vertikal entlang des Richtungspfeils P1 angehoben, um die Oberfolie 7 gegen den Außenrahmen 14 zu drücken. Während des Einklemmens der Oberfolie 7 bleiben das Oberwerkzeug 27 und das Unterwerkzeug 28 geöffnet.

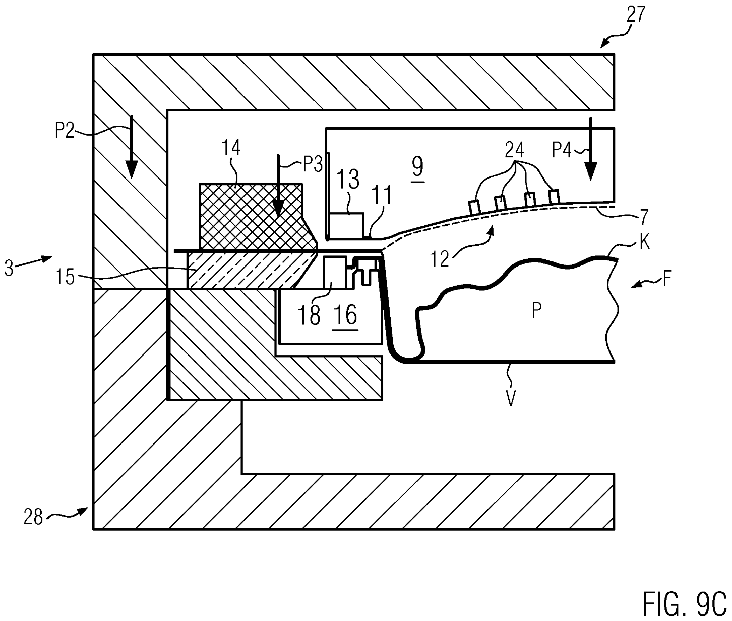

Gemäß Figur 9C werden das Oberwerkzeug 27 und das Unterwerkzeug 28 der Siegelstation 3 geschlossen. Dafür senkt sich das Oberwerkzeug 27, einschließlich der darin angeordneten Siegelplatte 9 sowie der zusammengedrückten Außen- und Klemmrahmen 14, 15, nach unten. Das Absenken des Oberwerkzeugs 27, der Siegelplatte 9 sowie der Außen- und Klemmrahmen 14, 15 wird schematisch anhand der Richtungspfeile P2, P3 und P4 gezeigt. Die beiden Klemmbacken 13, 18 sind gemäß Figur 9C nun näher zusammengerückt. Alternativ dazu könnte das Unterwerkzeug 28, einschließlich der Schalenaufnahme 16, in Richtung des Oberwerkzeugs 27 angehoben werden, um die beiden Klemmbacken 13, 18 näher zusammenzurücken.

Ferner zeigt Figur 9C, dass mittels der Siegelstation 3 eine Vakuumskinpackung F gemäß der Figur 3 herstellbar ist. Figur 9C zeigt, dass über die in der Siegelplatte 9 ausgebildeten Evakuierungs- bzw. Belüftungsöffnungen 24 (siehe auch Figur 6) ein Vakuum herstellbar ist, um als Zwischenschritt die in Figur 9C gestrichelt dargestellte Oberfolie 7 in die Wölbung 12 der Siegelplatte 9 hineinzuziehen. Dadurch wird die nach oben gezogene Oberfolie 7 vorgewärmt, so dass sie eine verbesserte Materialumformbarkeit aufweist. Nach dem Vorwärmen der Oberfolie 7 wird das Vakuum oberhalb der Oberfolie 7 geöffnet, so dass sich anhand des plötzlichen Druckausgleichs, gegebenenfalls mittels gesteuerter Druckbeaufschlagung oberhalb der Oberfolie 7, innerhalb der Siegelstation 3 die vorgewärmte Oberfolie 7 eng anliegend nach unten entlang einer Innenseite der Verpackungsschale V und der Kontur des Produkts P verformt. Dabei entsteht ein entlang der Kontur des Produkts P abdeckender Skin K, der entlang der Innenseite der Verpackungsschale V sowie entlang der Produktkontur tiefgezogen ist. Zur Herstellung des Skins K könnte zusätzlich mittels der in Figur 5 gezeigten Evakuierungs- bzw. Begasungsöffnungen 19 ein Vakuum (gesteuerter Unterdruck) unterhalb der Oberfolie 7 erzeugt werden, wodurch die vorgewärmte Oberfolie 7 nach unten tiefziehbar ist.

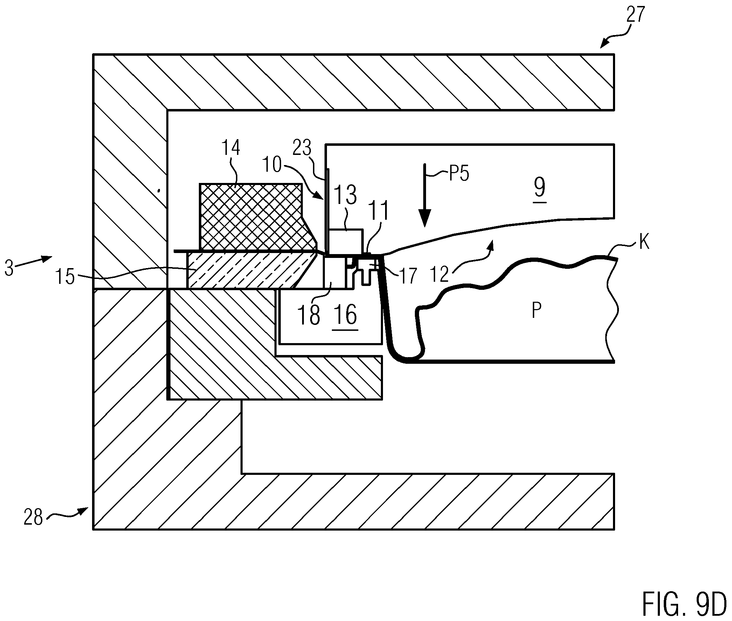

Figur 9D zeigt die Siegelplatte 9 und die Schalenaufnahme 16 vollständig zusammengerückt, wodurch die erste Klemmbacke 13 auf die darunter angeordnete zweite Klemmbacke 18 gedrückt wird. Gleichzeitig wird das an der Siegelplatte 9 befestigte Schneidmesser 10 mit seinem zweiten Messerabschnitt 23 derart mit der Siegelplatte 9 nach unten verstellt, dass es mit dem zweiten Messerabschnitt 23 gegen die zweite Klemmbacke 18 drückt, wodurch die Aufreißecke A, B, C ausgeschnitten wird. Das Absenken der Siegelplatte 9 wird schematisch anhand des Richtungspfeils P5 dargestellt.

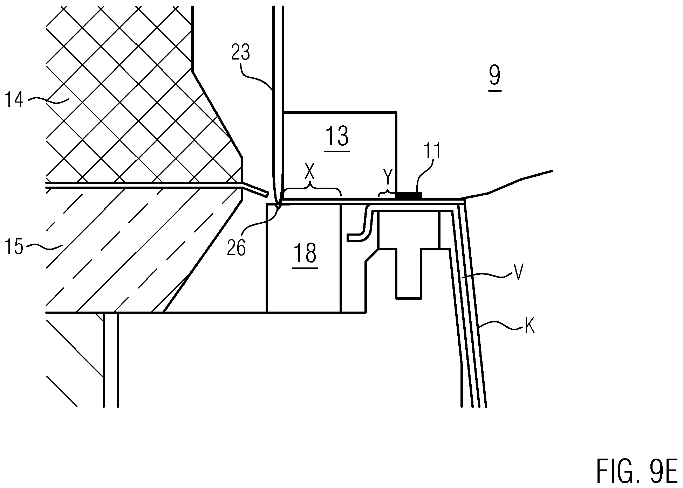

Der in der Figur 9D dargestellte Schneidverfahrensschritt ist in der Figur 9E vergrößert dargestellt. In Figur 9E ist gut zu sehen, dass die erste Klemmbacke 13 derart geformt ist, dass sie sowohl die Oberfolie 7 im Bereich der Aufreißecke A, B, C gegen die zweite Klemmbacke 18 als auch die Oberfolie 7 teilweise gegen den Randbereich R der Verpackungsschale V drückt. Damit wird die Oberfolie 7 zum Ausschneiden der Aufreißecke A, B, C optimal fixiert. In diesem Zusammenhang zeigt Figur 9E, dass die erste Klemmbacke 13 in einem Bereich X die Oberfolie 7 gegen die darunter angeordnete zweite Klemmbacke 18 und in einem Bereich Y die Oberfolie 7 auf einen Teil des darunter positionierten Randbereichs R der Schalenaufnahme V drückt. Die Schneidung der Oberfolie 7, einschließlich der Aufreißecke A, B, C, erfolgt vor dem Siegelvorgang.

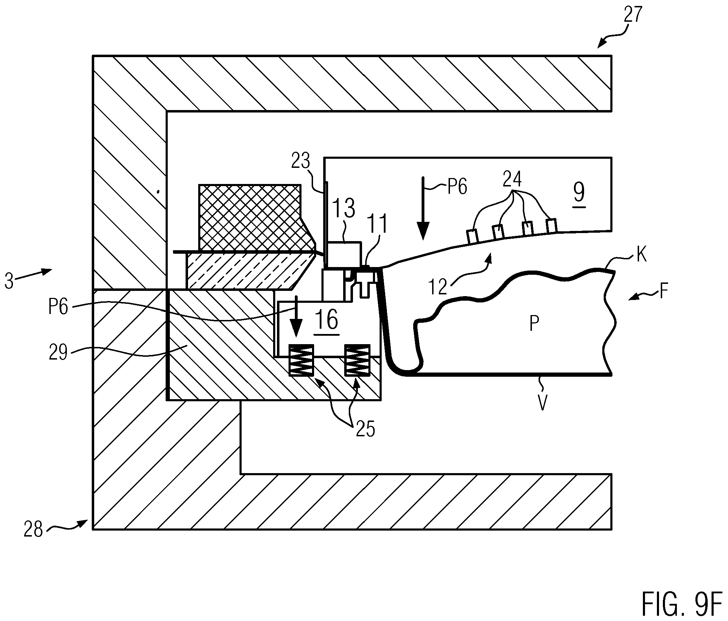

Figur 9F zeigt schematisch den Siegelvorgang. Dafür wird die Siegelplatte 9 entsprechend dem Richtungspfeil P6 aus der in Figur 9D gezeigten Position weiter nach unten verfahren, wodurch die Schalenaufnahme 16 hin zum Lagerrahmen 29 gedrückt wird. Dabei wird das zwischen dem Lagerrahmen 29 und der Schalenaufnahme 16 angeordnete Federpaket 25 zusammengedrückt. Während dieser Hubbewegung wird die Siegelnaht S umlaufend des Randbereichs R der Verpackungsschale V mittels zeitgesteuertem Druck- und Temperatureintrag hergestellt.

Das erfindungsgemäße Konzept lässt sich außer bei der Herstellung von Vakuumskinpackungen F auch hervorragend für die Herstellung anderer Verpackungstypen verwenden. Beispielsweise kann die erfindungsgemäße Siegelstation dafür eingesetzt werden, Verpackungen mit Aufreißecke und ohne Atmosphärenaustausch, Verpackungen mit Aufreißecke sowie einer gaspermeablen Deckelfolie, und Verpackungen mit darin erzeugter Schutzatmosphäre herzustellen.

## Patentansprüche

1. Siegelstation (3) für eine Verpackungsmaschine (1), die insbesondere in Form eines Traysealers (T) konfiguriert ist, umfassend ein Oberwerkzeug (27) mit einer Siegelplatte (9) sowie ein Unterwerkzeug (28) mit einer Schalenaufnahme (16) zur Aufnahme von mindestens einer zu verschließenden Verpackungsschale (V), wobei innerhalb der Siegelstation (3) ein Schneidmesser (10) angeordnet ist, anhand dessen ein Deckel (D) zum Verschließen der Verpackungsschale (V) aus einer Oberfolie (7) ausschneidbar ist, wobei das Schneidmesser (10) zum Ausschneiden des Deckels (D) entlang dessen Umrisses (U) eine endlose Schneidkante (21) aufweist, die einen ersten und einen zweiten Messerabschnitt (22, 23) ausbildet, wobei der erste Messerabschnitt (22) zum Ausschneiden eines in Draufsicht auf einem Randbereich (R) der Verpackungsschale (V) verlaufenden ersten Abschnitts (A1) des Umrisses (U) des Deckels (D) ausgebildet ist, und wobei der zweite Messerabschnitt (23) zum Ausschneiden mindestens eines in Draufsicht außerhalb des Randbereichs (R) der Verpackungsschale (V) verlaufenden zweiten Abschnitts (A2) des Umrisses (U) des Deckels (D) ausgebildet ist, um eine über den Randbereich (R) hinausragende Aufreißecke (A, B, C) im Deckel (D) herzustellen, **dadurch gekennzeichnet, dass** an der Siegelplatte (9) außerhalb einer daran vorgesehen Siegelfläche (11) zum Herstellen einer Siegelnaht (S) eine erste Klemmbacke (13) und an der Schalenaufnahme (16) eine zweite Klemmbacke (18) vorgesehen sind, wobei die beiden Klemmbacken (13, 18) zum Ausschneiden der Aufreißecke (A, B, C) aneinander drückbar sind, um die Oberfolie (7) dazwischen einzuklemmen.

2. Siegelstation nach Anspruch 1, **dadurch gekennzeichnet, dass** die erste und/oder zweite Klemmbacke (13, 18) aus Kunststoff hergestellt sind.

3. Siegelstation nach einem der vorangehenden Ansprüche, **dadurch gekennzeichnet, dass** die erste und/oder zweite Klemmbacke (13, 18) aus einem Material geringerer Wärmeleitfähigkeit als die Siegelplatte (9) ausgebildet sind.

4. Siegelstation nach einem der vorangehenden Ansprüche, **dadurch gekennzeichnet, dass** der zweite Messerabschnitt (23) zumindest abschnittsweise an der ersten Klemmbacke (13) anliegend geformt ist.

5. Siegelstation nach einem der vorangehenden Ansprüche, **dadurch gekennzeichnet, dass** die erste Klemmbacke (13) lösbar an der Siegelplatte (9) und/oder die zweite Klemmbacke (18) lösbar an der Schalenaufnahme (16) befestigt sind.

6. Siegelstation nach einem der vorangehenden Ansprüche, **dadurch gekennzeichnet, dass** die erste Klemmbacke (13) derart ausgebildet ist, dass sie beim Ausschneiden des Deckels (D) in Draufsicht teilweise auf die Oberfolie (7) über dem Randbereich (R) der Verpackungsschale (V) drückbar ist.

7. Siegelstation nach einem der vorangehenden Ansprüche, **dadurch gekennzeichnet, dass** der zweite Messerabschnitt (23) derart ausgebildet ist, dass er zumindest teilweise in die zweite Klemmbacke (18) eintaucht, wenn die erste Klemmbacke (13) gegen die zweite Klemmbacke (18) gedrückt ist, um die Aufreißecke (A, B, C) auszuschneiden.

8. Siegelstation nach einem der vorangehenden Ansprüche, **dadurch gekennzeichnet, dass** die Siegelplatte (9) mehrere Belüftungsöffnungen (24) zum Herstellen von Skinverpackungen (F) aufweist.

9. Siegelstation nach einem der vorangehenden Ansprüche, **dadurch gekennzeichnet, dass** die Siegelplatte (9) zwischen der Siegelfläche (11) eine von der Schalenaufnahme (16) weggerichtete Wölbung (12) aufweist.

10. Siegelstation nach einem der vorangehenden Ansprüche, **dadurch gekennzeichnet, dass** das Schneidmesser (10) ein endloses Messerband (M) ist, das lösbar an der Siegelplatte (9) befestigt ist.

11. Verfahren zum Herstellen von Skinverpackungen (F), wobei ein Deckel (D) mit mindestens einer Aufreißecke (A, B, C) aus einer als Skinfolie (G) bereitgestellten Oberfolie (7) mittels eines innerhalb einer Siegelstation (3) einer Verpackungsmaschine (1) angeordneten Schneidmessers (10) ausgeschnitten wird, und wobei ringsum entlang eines Randbereichs (R) einer innerhalb der Siegelstation (3) bereitgestellten Verpackungsschale (V) eine Siegelnaht (S) hergestellt wird, wobei außerhalb der Siegelnaht (S) in Draufsicht die Aufreißecke (A, B, C) des aus der Skinfolie ausgeschnittenen Deckels (D) über den Randbereich (R) der Verpackungsschale (V) hinausragt, **dadurch gekennzeichnet, dass** zum Ausschneiden des Deckels (D) eine erste Klemmbacke (13), die an der Siegelplatte (9) befestigt ist, die Skinfolie (G) gegen eine zweite Klemmbacke (18) drückt, die an der Schalenaufnahme (16) befestigt ist, um die Aufreißecke (A, B, C) des Deckels (D) herzustellen.

12. Verfahren nach Anspruch 11, **dadurch gekennzeichnet, dass** ein erster Messerabschnitt (22) einen in Draufsicht auf einem Randbereich (R) der Verpackungsschale (V) verlaufenden ersten Abschnitt (A1) eines Umrisses (U) des Deckels (D) ausschneidet.

13. Verfahren nach Anspruch 11 oder 12, **dadurch gekennzeichnet, dass** ein zweiter Messerabschnitt (23) des Schneidmessers (10) zumindest teilweise in die zweite Klemmbacke (18) eintaucht, wenn die erste Klemmbacke (13) gegen die zweite Klemmbacke (18) gedrückt wird, um die Aufreißecke (A, B, C) auszuschneiden.

14. Verfahren nach einem der vorangehenden Ansprüche 11 bis 13, **dadurch gekennzeichnet, dass** in Draufsicht beim Ausschneiden des Deckels (D) die erste Klemmbacke (13) auf die Skinfolie (G) über einem Teil des Randbereichs (R) der Verpackungsschale (V) drückt.

## Claims

1. Sealing station (3) for a packaging machine (1), which is configured in particular in the form of a tray sealer (T), comprising an upper die (27) with a sealing plate (9) and a lower die (28) with a tray holder (16) for receiving at least one packaging tray (V) to be sealed, a cutting blade (10) being arranged inside the sealing station (3), by means of which a lid (D) for closing the packaging tray (V) can be cut out of a top film (7), wherein the cutting blade (10) for cutting out the lid (D) along its contour (U) has an endless cutting edge (21) which forms a first and a second blade section (22, 23), wherein the first blade section (22) is formed for cutting out a first section (A1) of the contour (U) of the lid (D) extending in plan view on an edge region (R) of the packaging tray (V), and wherein the second blade section (23) is formed for cutting out at least one second section (A2) of the contour (U) of the lid (D) extending in plan view outside the edge region (R) of the packaging tray (V) in order to produce a tear-off corner (A, B, C) in the lid (D) projecting beyond the edge region (R), **characterized in that** a first clamping jaw (13) is provided on the sealing plate (9) outside a sealing surface (11) provided thereon for producing a sealing seam (S) and a second clamping jaw (18) is provided on the tray holder (16), the two clamping jaws (13, 18) being pressable together for cutting out the tear-off corner (A, B, C) in order to clamp the top film (7) between them.

2. Sealing station according to claim 1, **characterized in that** the first and/or second clamping jaw (13, 18) are made of plastic.

3. Sealing station according to one of the preceding claims, **characterized in that** the first and/or second clamping jaw (13, 18) are formed from a material with a lower thermal conductivity than the sealing plate (9).

4. Sealing station according to one of the preceding claims, **characterized in that** the second blade section (23) is formed at least partially adjacent to the first clamping jaw (13).

5. Sealing station according to one of the preceding claims, **characterized in that** the first clamping jaw (13) is detachably fastened to the sealing plate (9) and/or the second clamping jaw (18) is detachably fastened to the tray holder (16).

6. Sealing station according to one of the preceding claims, **characterized in that** the first clamping jaw (13) is formed such that, when the lid (D) is cut out, it can be partially pressed onto the top film (7) above the edge region (R) of the packaging tray (V) in plan view.

7. Sealing station according to one of the preceding claims, **characterized in that** the second blade section (23) is designed such that it at least partially immerses into the second clamping jaw (18) when the first clamping jaw (13) is pressed against the second clamping jaw (18) to cut out the tear-off corner (A, B, C).

8. Sealing station according to one of the preceding claims, **characterized in that** the sealing plate (9) has a plurality of ventilation openings (24) for producing skin packaging (F).

9. Sealing station according to one of the preceding claims, **characterized in that** the sealing plate (9) has a bulge (12) between the sealing surface (11) directed away from the tray holder (16).

10. Sealing station according to one of the preceding claims, **characterized in that** the cutting blade (10) is an endless blade band (M) releasably attached to the sealing plate (9).

11. Method for producing skin packaging (F), wherein a lid (D) with at least one tear-off corner (A, B, C) is cut out of an top film (7) provided as skin film (G) by means of a cutting blade (10) arranged within a sealing station (3) of a packaging machine (1), and wherein a sealing seam (S) is produced all around along an edge region (R) of a packaging tray (V) provided within the sealing station (3), wherein the tear-off corner (A, B, C) of the lid (D) cut out of the skin film projects beyond the edge region (R) of the packaging tray (V) outside the sealing seam (S) in plan view, **characterized in that** for cutting out the lid (D) a first clamping jaw (13) attached to the sealing plate (9) presses the skin film (G) against a second clamping jaw (18) attached to the tray holder (16) to produce the tear-off corner (A, B, C) of the lid (D).

12. Method according to claim 11, **characterized in that** a first blade section (22) cuts out a first section (A1) of a contour (U) of the lid (D) extending in plan view on an edge region (R) of the packaging tray (V).

13. Method according to claim 11 or 12, **characterized in that** a second blade section (23) of the cutting blade (10) at least partially immerses into the second clamping jaw (18) when the first clamping jaw (13) is pressed against the second clamping jaw (18) to cut out the tear-off corner (A, B, C).

14. Method according to one of the preceding claims 11 to 13, **characterized in that** when the lid (D) is cut out in plan view, the first clamping jaw (13) presses onto the skin film (G) over a part of the edge region (R) of the packaging tray (V).

## Revendications

1. Station de soudage (3) pour une machine d'emballage (1) qui est configurée en particulier sous la forme d'un scelleur de barquettes (T), comprenant un outil supérieur (27) avec une plaque de soudage (9) et un outil inférieur (28) avec un réceptacle de barquettes (16) pour recevoir au moins une barquette d'emballage (V) à fermer, une lame de coupe (10) étant disposée à l'intérieur de la station de soudage (3), au moyen duquel un couvercle (D) peut être découpé dans une feuille supérieure (7) pour fermer la barquette d'emballage (V), **caractérisée en ce que** la lame de coupe (10) pour découper le couvercle (D) le long de son contour (U) présente un bord de coupe sans fin (21) qui forme une première et une seconde section de lame (22, 23), la première section de lame (22) étant conçue pour découper une première section (A1) du contour (U) du couvercle (D) qui s'étend en vue de dessus sur une zone de bord (R) de la barquette d'emballage (V), et dans lequel la seconde section de lame (23) est conçue pour découper au moins une seconde section (A2) du contour (U) du couvercle (D), laquelle second section (A2) s'étend en vue de dessus à l'extérieur de la zone de bord (R) de la barquette d'emballage (V), afin de produire un angle d'arrachage (A, B, C) dans le couvercle (D) qui dépasse la zone de bord (R), **caractérisé en ce que** la seconde section de lame (23) est conçue pour découper le contour (U) du couvercle (D), **en ce qu'**une première mâchoire de serrage (13) est prévue sur la plaque de soudage (9) à l'extérieur d'une surface de soudage (11) prévue sur celle-ci pour la réalisation d'un joint soudé (S) et une seconde mâchoire de serrage (18) est prévue sur le réceptacle de barquette (16), les deux mâchoires de serrage (13, 18) pouvant être comprimées l'une contre l'autre pour découper l'angle d'arrachage (A, B, C) afin de serrer entre elles le film supérieur (7).

2. Station de soudage selon la revendication 1, **caractérisée en ce que** la première et/ou la seconde mâchoire de serrage (13, 18) sont en matière plastique.

3. Station de soudage selon l'une des revendications précédentes, **caractérisée en ce que** la première et/ou la seconde mâchoire de serrage (13, 18) sont faites d'un matériau de conductivité thermique inférieure à celle de la plaque de soudage (9).

4. Station de soudage selon l'une des revendications précédentes, **caractérisée en ce que** la seconde section de lame (23) est formée de manière à s'appuyer au moins par sections contre la première mâchoire de serrage (13).

5. Station de soudage selon l'une des revendications précédentes, **caractérisée en ce que** la première mâchoire de serrage (13) est fixée de manière amovible à la plaque de soudage (9) et/ou la seconde mâchoire de serrage (18) est fixée de manière amovible au réceptacle de la coque (16).

6. Station de soudage selon l'une des revendications précédentes, **caractérisée en ce que** la première mâchoire de serrage (13) est conçue de telle sorte que, lorsque le couvercle (D) est découpé, elle peut être partiellement pressée sur le film supérieur (7) au-dessus de la zone de bord (R) de la barquette d'emballage (V) en vue de dessus.

7. Station de soudage selon l'une des revendications précédentes, **caractérisée en ce que** la seconde section de lame (23) est conçue de telle manière qu'elle plonge au moins partiellement dans la seconde mâchoire de serrage (18) lorsque la première mâchoire de serrage (13) est pressée contre la seconde mâchoire de serrage (18) afin de découper l'angle d'arrachage (A, B, C).

8. Station de soudage selon l'une des revendications précédentes, **caractérisée en ce que** la plaque de soudage (9) présente une pluralité d'ouvertures de ventilation (24) pour la fabrication d'emballages blister (F).

9. Station de soudage selon l'une des revendications précédentes, **caractérisée en ce que** la plaque de soudage (9) présente une courbure (12) entre la surface de soudage (11) dirigée à l'opposé du récepteur de plateau (16).

10. Station de soudage selon l'une des revendications précédentes, **caractérisée en ce que** la lame de coupe (10) est une bande de coupe sans fin (M) qui est fixée de manière amovible à la plaque de soudage (9).

11. Procédé de fabrication d'emballages blister (F), dans lequel un couvercle (D) avec au moins un angle d'arrachage (A, B, C) est découpé dans une feuille supérieure (7) prévue comme feuille blister (G) au moyen d'une lame (10) disposé dans un poste de soudage (3) d'une machine d'emballage (1), et dans lequel un joint de soudage (S) est réalisé tout autour le long d'une zone de bord (R) d'une barquette d'emballage (V) prévue dans le poste de soudage (3), l'angle d'arrachage (A, B, C) du couvercle (D) découpé dans le film blister dépassant de la zone de bord (R) de la barquette d'emballage (V) en dehors du joint soudé (S) en vue de dessus, **caractérisé en ce que** le couvercle (D) est découpé dans le film blister, que pour découper le couvercle (D), une première mâchoire de serrage (13), qui est fixée à la plaque de fermeture (9), comprime la feuille blister (G) contre une seconde mâchoire de serrage (18), qui est fixée au réceptacle de la barquette (16), afin de produire le coin d'arrachage (A, B, C) du couvercle (D).

12. Procédé selon la revendication 11, **caractérisé en ce qu'**une première partie de lame (22) découpe une première partie (A1) d'un contour (U) du couvercle (D) s'étendant en vue de dessus sur une zone de bord (R) de la barquette d'emballage (V).

13. Procédé selon les revendications 11 ou 12, **caractérisé en ce qu'**une seconde partie de couteau (23) de la lame de coupe (10) plonge au moins partiellement dans la seconde mâchoire (18) lorsque la première mâchoire (13) est pressée contre la seconde mâchoire (18) pour couper l'angle d'arrachage (A, B, C).

14. Procédé selon l'une des revendications précédentes 11 à 13, **caractérisé en ce que**, en vue de dessus, lorsque le couvercle (D) est découpé, la première mâchoire (13) appuie sur le film blister (G) sur une partie de la zone de bord (R) de la barquette d'emballage (V).
